# EUROPEAN PATENT APPLICATION

(11) **EP 4 470 683 A1**
(43) Date of publication of application: **04.12.2024**
(21) Application number: 23176924.1
(22) Date of filing: 02.06.2023
(51) Int. Cl.: B07C 5/36

(54) **A METHOD AND A SYSTEM FOR SORTING AND STORING OBJECTS**

(71) Applicant: BEUMER Group GmbH & Co. KG, 59269 Beckum (DE)
(72) Inventor: Radner, Frederik, 59302 Oelde (DE)
(74) Representative: Plougmann Vingtoft a/s

(57) **Abstract**

The present invention concerns a method and a system for sorting and storing objects in a warehouse environment, in particular non-conveyable items, said system comprising a receiving zone for receiving a group of unsorted objects, wherein said receiving zone comprises means for identification of said objects individually and successively placing said scanned objects on a verification station, where there is provided means for recording item data for each of the objects, and buffer section for buffering the objects successively between the verification station and a loading station; a storage zone comprising a plurality of destination containers positioned in storage positions and where a grid of aisles are formed between said storage positions so that a plurality of transport vehicles in accordance with individual transportation tasks can select and transport a predetermined destination container from a storage zone to the loading station for a particular identified object; wherein said identified objects are loaded in said selected destination containers at said loading station; and said selected and loaded destination containers are transported either back to an available storage position in said storage zone or to a dispatch area.

## Description

### FIELD OF THE INVENTION

The present invention relates to a method and a system for sorting and storing objects, in particular non-standard items.

### BACKGROUND OF THE INVENTION

There are several sortation systems (Loop Sorter, Line Sorter, Pouch Sorter, etc.) available for sorting objects, such as normal sized parcels, i.e. objects having certain minimal and maximal dimensions including weight limitations as well as restrictions to the items shape. Objects falling outside of this may be referred to as non-standard objects. Such non-standard objects are not suitable for automated sorting and cannot be sorted by state-of-the-art sortation systems. This results in a manual labour-intensive processing of these objects. Especially large and heavy items also involve to an un-ergonomic and low performance manual sortation process.

Parcel conveyors that are used in logistics centres are highly sophisticated machines for handling a broad spectrum of objects, such as parcels. They may be roller conveyors, belt conveyors, or any other type of conveyor. The parcels are generally packets, i.e. of rectangular block shape. The parcel is provided with a delivery address for the parcel on one face of the rectangular block and serves for the sorting process. For example, a digital image of said delivery address may be formed using a scanner and it may be sent to the data processor unit for automatic recognition and for identifying a sorting outlet that corresponds to said delivery address in the automatic sorting process. A sorting code in the form of a bar code may also be placed on one face of the parcel.

However, as mentioned above some parcels to be sorted cannot be handled automatically by such automatic sorting conveyors because of their size, shape, or weight that are incompatible with the operating characteristics of such conveyors.

Such parcels may be referred to as "non-standard parcels" or "non-conveyable parcels". For example, such a parcel may be a large, heavy and/or hazardous items or the like, e.g. a parcel may be in the shape of a long cylinder, or centre of gravity based which can be rolling, or a large parcel with an odd centre of gravity.

The quantity of non-conveyable parcels to be handled in a logistics enter can represent a proportion of about 10% of the parcels for machine sorting that go through the automatic sorting conveyor.

In US 10,744,536 B2 there is described an attempt to automate the sorting of such non-standard parcels. However, normally such non-standard parcels are essentially handled manually. The operatives in charge of handling such non-standard parcels in a logistics centre have to pick them up from a loading point and move them to an unloading or drop-off point, e.g. in the vicinity of a sorting outlet, which is arduous, in particular if the parcels are heavy and bulky.

In addition, such non-standard parcels that are handled manually cannot, in real time, follow any reorganization of the parcel sorting plan. They therefore follow a sorting process that can be different from the sorting process of the machine-sortable parcels.

It is an object of the present invention to provide a system and a method for sorting and storing in particular non-conveyable items in a less labour intensive manner.

### SUMMARY OF THE INVENTION

This object is achieved in a first aspect of the invention by providing a method for sorting and storing objects, in particular non-conveyable items, said method comprising the steps of:
- providing a group of objects to be sorted;
- identifying the objects,
- initiating for each object a transportation task for a transport vehicle to select and transport a predetermined container from a storage zone to the loading station for a particular identified object;
- transporting the selected container to said loading station;
- loading said identified object in said selected destination container at said loading station; and
- transporting said selected and loaded container to either an storage position in said storage zone or to a dispatch area.

In a second aspect of the invention, there is accordingly provided a system for sorting and storing objects, in particular non-conveyable items, said system comprising
- a receiving zone for receiving a group of unsorted objects, wherein said receiving zone comprises means for identification of said objects individually
- a storage zone comprising a plurality of containers positioned in storage positions and where a grid of aisles are formed between said storage positions so that a plurality of transport vehicles in accordance with individual transportation tasks can select and transport a predetermined destination container from a storage zone to the loading station for a particular identified object;
wherein said identified objects are loaded in said selected containers at said loading station; and said selected and loaded containers are transported either back to an available storage position in said storage zone or to a dispatch area.

By the invention, there is provided an advantageous sortation and storing concept, where the storage containers are transported to the receiving zone, whereby any manual handling is reduced significantly. This "Goods to Person" system is supported by the transport vehicles, such as AGVs, solving the previous described challenges of sortation of non-machinable items. The advantage of this main idea of the present invention is a "Goods to Person" system delivering the destination to the item and not vice versa.

The usage of AGVs for transportation purposes is well known in logistics systems. Especially, systems are used in Warehouse and Distribution Centres transporting SKUs (in racks) to workstations where operators pick needed items to fulfil customer orders. However, by the present invention it is realised that such transport vehicles can be used in relation to sorting and storing of non-conveyable parcels and thereby manual handling can be reduced, since the roll containers are transported to a receiving zone for being provided with a parcel and then being returned to a position in the storage zone.

Preferably, after the step of identification the objects are placed successively on a verification station, where item data of each of the objects are recorded. This allows for a simple and efficient identification and recording of the individual objects in the control system.

Furthermore, a step of buffering the objects successively for a loading station may be provided after the identification. Hereby, an efficient matching of the objects and the selected containers may be achieved.

Advantageously, the objects being handled in the system and method are unsuitable for conveying, such as large, heavy and/or hazardous items, or items that can easily roll or are otherwise difficult to handle due to an odd centre of gravity or the like. However, it is realised that also "standard" parcels can equally be handled in the system and method according to the invention.

Preferably, the step of initiating the transportation task is triggered by the identification of the selected object for the predetermined destination container. Hereby, the control system reacts on the identification data by ordering roll container in which the selected object is predestined for.

Preferably, the item data comprises the dimensions, such as volume, and weight of the object. This data is useful for several purposes, such as identifying the object later on, calculation of available capacity in the containers, etc. Accordingly, the selection of a predetermined destination container may be based on the identification, such as an address, and/or the recorded weight, shape and/or size.

Advantageously, if at least one predefined criterion is met, said storage position is in a dispatch area of the storage zone. Said criterion may include one or more of
- if the destination container is full, and/or
- if the selected object does not fit into the presented destination container.

If the selected object fits into the destination container or not may be defined by a sensor, such as a camera, or a calculation of the volume based on the loaded items.

The step of successively placing the identified objects on the verification station may in one embodiment be performed manually, possibly with the assistance of a lifting aid or alternatively by a robot.

Preferably, the step of loading said identified object in said selected destination container at said loading station may be performed manually, possibly with the assistance of a lifting aid or alternatively by a robot.

Preferably, the handling of objects for sortation and storage is controlled by a controlling system. The control system includes controlling all of the activities needed for the sortation and storage. The item data, obtained by the identification could be used for process optimization by the controlling system. In the controlling system, based on the item data the system may for instance decide if item still fits into a destination roll cage, if destination roll cage is full, and/or the system to track filling degree of the destination roll cage. The control system could use static or dynamic storage allocation. The dynamic storage allocation could be supported by artificial intelligence (AI).

The system according to the invention may advantageously further comprise a buffer section for buffering the objects successively between the verification station and a loading station comprises a roller conveyor. This allows for a large capacity of the sortation and storage system. Accordingly, the plurality of transport vehicles may be transporting the plurality of selected destination containers to a loading cue for said loading station. Hereby, a fast handling of the objects may be achieved.

Preferably, at least one of the destination containers is a roll cage, a tote or the like. In a particular embodiment, all of the destination containers are of the same type. However, by the invention it is realised that the containers can also be of different types.

In an advantageous embodiment, a rejected object roll cage is provided at the loading station for receiving objects not to be fitted into destination container. Hereby, also rejected objects can be handled in an efficient manner.

In one embodiment, the step of identifying may comprise scanning the objects individually. However, it is realised that other means for identifying the objects may be provided in addition or as an alternative to scanning, such as using an RFID chip or the like.

### DETAILED DESCRIPTION

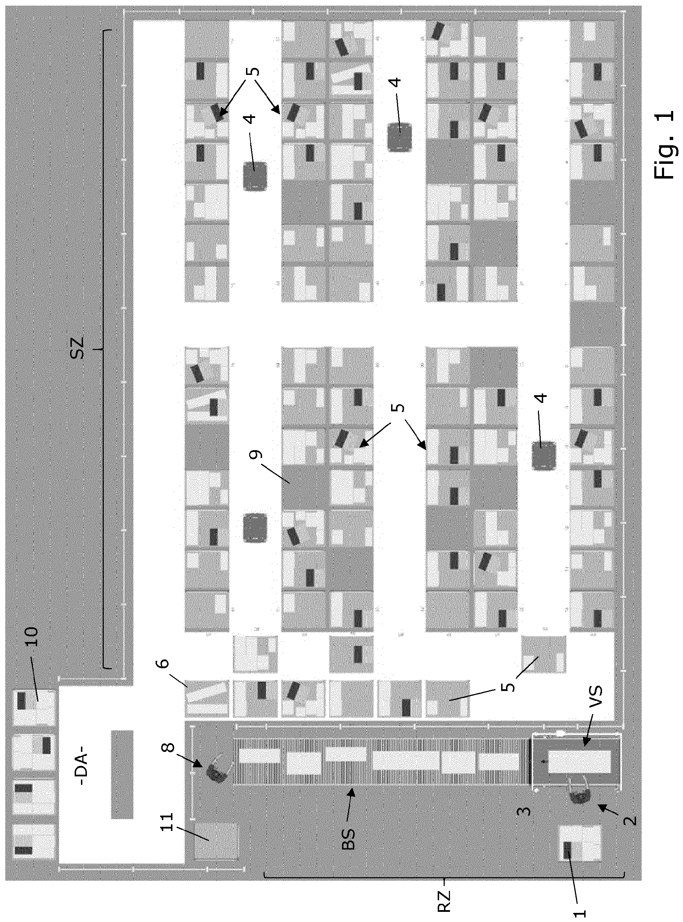

In the following, the invention is described in more detail with reference to the embodiment shown in the accompanying sole figure (fig. 1), which shows an example of a layout of a storage and sorting facility according to an embodiment of the invention. However, by the invention it is realised that the described embodiment is only one out of many different possible solutions.

The layout comprises a receiving zone RZ for receiving and scanning the incoming objects before the objects are loaded onto storage containers. Accordingly, the receiving zone RZ comprises a verification station VS and a buffer station BS and a loading station (6). The layout further comprises a storage zone SZ and a dispatch area DA. The storage zone SZ comprises a grid of transport aisles for transporting containers 5 in between which a plurality of storage positions are provided for storage of a plurality of transport storage containers 5.

The process which is performed in this layout is described in the following:
A transportable storage container, preferably a roll cage, with unsorted non-conveyable items 1 is presented to an operator 2 in the verification station VS of the receiving zone RZ. The unsorted non-conveyable items 1 could be unloaded automatically, semi-automatically and/or manually from the storage, which could also be a truck, and brought to the VS station using conveyor belt technology. The operator 2 is then scanning an item and places the item on a DW station 3. A DW station 3 being a station for obtaining dimensions and weight of the objects.

Alternatively - or in addition, the weight could also be determined by the robot or in the buffer zone.

In another embodiment, there could be a solution where everything is unloaded automatically and then a system separates the conveyable from the non-conveyable, possibly also scanned or otherwise identified and weighed at this point, and then transported to the sorter on the one hand and to the solution presented here on the other.

The item data, including dimensions, shape, weight and/or the like, could be used for process optimization. In the control system, based on the item data the system may for instance decide if item still fits into a destination roll cage 5, if destination roll cage is full, and/or the system to track filling degree of the destination roll cage 5. The system could preferably also send data that the container/roll cage 5 must now be picked up, as the truck in which the container is to be transported is leaving. Therefore, a half-full container would be transported away and a new / empty one would be filled.

The scanning initiates a transportation task for a transport vehicle 4, such as an AGV (Autonomous Guided Vehicle), which then is picking up the requested destination roll cage 5 bringing it to the loading station 6. A sensor, preferably a camera, could also be provided here to monitor the filling level of the container. In addition, the position of the item in the container/roll cage is determined by a robot during loading so that the container can be optimally filled. In an embodiment, the AGV 4 engages the roll cage 5 by driven underneath the floor of the roll cage 5 and then attach the roll cage 5 to the AGV 4 for transport of the roll cage 5. By the invention it is realised that in addition or as an alternative to a roll cage, another form of container could be used, such as pallets, totes, plastic bins, shelving units, carts or trolleys, mobile racks, etc.

The scanned and measured item will be buffered on a roller conveyor 7 in the buffer station BS until the requested destination roll cage is arriving at the loading station 6. There another operator 8 is taking the item off the roller conveyor 7 placing it in the destination roll cage 5 at the loading station 6.

The workplace at the operators 2, 8 could be equipped with lifting aids assisting the operator 2, 8 in transferring the items 1 or the operators could be replaced by robots automatically transferring the items. In an alternative embodiment, this operation can also be replaced by a robot, such as a 6-arm robot or a Grantry robot. Reference is made to WO 2021/198053, WO 2021/198058 and WO 2023/057368, which are hereby incorporated by reference, and which show examples of such a robotic system. In addition, the robot could exchange the grippers in order to select or adapt a suitable gripper depending on the packages.

If the item 1 fits into the presented destination roll cage 5 and the cage is not yet full the AGV 4 takes the cage back to an available storage position 9. If the item fits into the presented destination roll cage and the cage is full the AGV 4 takes the cage to an available outfeed position 10 in the dispatch area DA.

If the item 1 at the loading station 6 does not fit into the presented destination roll cage positioned at the loading station 6, the operator 8 places the item in an empty dispatch roll cage 11 while the full destination roll cage will be taken to an available outfeed position. Alternatively, this step could also be automatically loading the rejected items into trucks by the robots and brought to the truck in this transfer zone by other mobile robots. Here, the type of mobile robots could vary based on safety differences.

In the shown embodiment, the whole area shown in the figure could be in a security zone with a fence (not shown) to have a different security standard for the robots. In addition, there could also be safety systems here. It could also be foreseen that when a person enters the area, the mobile robots shut down so as not to pose a danger. It would also be possible to monitor the entire area with a camera and automatically detect if liquids or other substances leak from the packages or if packages fall out of the containers due to their shape / weight / centre of gravity. Such safety systems may preferably be implemented in the control system.

Above, the invention is described with reference to a currently preferred embodiment. Other embodiments may be provided without departing from the scope of the accompanying claims. Some variables may be the type of destination (e.g. Roll Cage, Tote, etc.), the type of transportation system (e.g. AGV, transfer car, etc.), and the type of items to be sorted (e.g. non-machinable, machinable, etc.), as well as the means for identification may be a scanner as well as other types of technology for identifying an object, e.g. utilising RFID chips or the like.

## Claims

1. A method for sorting and storing objects, in particular non-conveyable items, said method comprising the steps of:
- providing a group of objects to be sorted;
- identifying the objects,
- initiating for each object a transportation task for a transport vehicle to select and transport a predetermined container from a storage zone to the loading station for a particular identified object;
- transporting the selected container to said loading station;
- loading said identified object in said selected destination container at said loading station; and
- transporting said selected and loaded container to either an storage position in said storage zone or to a dispatch area.

2. A method according to claim 1, whereby after the identification the objects are placed successively on a verification station, where item data of each of the objects are recorded.

3. A method according to claim 2, whereby a step of buffering the objects successively for a loading station is provided after the identification.

4. A method according to any one of claims 1 to 3, whereby the objects are unsuitable for conveying, such as large, heavy and/or hazardous items or the like.

5. A method according to any one of the preceding claims, whereby the step of initiating the transportation task is triggered by the identification of the selected object for the predetermined destination container.

6. A method according to any one of claims 1 to 5, whereby the item data comprises the dimensions, such as volume, and weight of the object.

7. A method according to any one of claims 1 to 6, whereby the transport vehicle is an autonomous guided vehicle (AGV).

8. A method according to any one of claims 1 to 7, whereby the selection of a predetermined destination container is based on the scanning, such as an address, and/or the recorded weight, shape and/or size.

9. A method according to any one of claims 1 to 8, whereby if at least one predefined criterion is met, said storage position is in a dispatch area of the storage zone.

10. A method according claim 9, whereby said criterion may include one or more of
- if the destination container is full, and/or
- if the selected object does not fit into the presented destination container.

11. A method according to any one of claims 1 to 10, whereby the step of successively placing the scanned objects on the verification station is performed manually, possibly with the assistance of a lifting aid or alternatively by a robot.

12. A method according to any one of claims 1 to 11, whereby the step of loading said scanned object in said selected destination container at said loading station is performed manually, possibly with the assistance of a lifting aid or alternatively by a robot.

13. A method according to any one of claims 1 to 12, whereby one or more of the steps of the method for sorting objects is controlled by a controlling system.

14. A method according to any one of claims 1 to 13, whereby the step of identifying may comprise scanning the objects individually.

15. A system for sorting and storing objects, in particular non-conveyable items, said system comprising
- a receiving zone for receiving a group of unsorted objects, wherein said receiving zone comprises means for identifying said objects individually
- a storage zone comprising a plurality of containers positioned in storage positions and where a grid of aisles are formed between said storage positions so that a plurality of transport vehicles in accordance with individual transportation tasks can select and transport a predetermined destination container from a storage zone to the loading station for a particular identified object;
wherein said identified objects are loaded in said selected containers at said loading station; and said selected and loaded containers are transported either back to an available storage position in said storage zone or to a dispatch area.

16. A system according to claim 15, wherein there is provided means for recording item data for each of the objects and positioning means for successively placing said identified objects on a verification station.

17. A system according to claim 15 or 16, wherein a buffer section is provided for buffering the objects successively between the verification station and a loading station.

18. A system according to any one of claims 15 or 16, wherein the objects are unsuitable for conveying, such as large, heavy and/or hazardous items or the like.

19. A system according to any one of claims 15 or 18, wherein the item data comprises the dimensions, such as volume, and weight of the object.

20. A system according to any one of claims 15 to 19, wherein the transport vehicle is an autonomous guided vehicle (AGV).

21. A system according to any one of claims 15 to 20, wherein the selection of a predetermined destination container is based on the identification, such as an address, and/or the recorded weight, shape and/or size.

22. A system according to any one of claims 15 to 21, wherein if at least one predefined criterion is met, said storage position is in a dispatch area of the storage zone, and wherein said criterion may include one or more of
- if the destination container is full, and/or
- if the selected object does not fit into the presented destination container.

23. A system according to any one of claims 15 to 22, wherein the placing of the identified objects on the verification station is performed manually, possibly with the assistance of a lifting aid or alternatively by a robot.

24. A system according to any one of claims 15 to 23, wherein the loading of said identified object in said selected destination container at said loading station is performed manually, possibly with the assistance of a lifting aid or alternatively by a robot.

25. A system according to any one of claims 15 to 24, wherein a buffer section is provided for buffering the objects successively between the verification station and a loading station comprises a roller conveyor.

26. A system according to any one of claims 15 to 25, wherein the plurality of transport vehicles are transporting the plurality of selected destination containers to a loading cue for said loading station.

27. A system according to any one of claims 15 to 26, wherein at least one of the destination containers is a roll cage, a tote or the like.

28. A system according to any one of claims 15 to 27, wherein a rejected object roll cage is provided at the loading station for receiving objects not to be fitted into destination container.
